# EUROPÄISCHE PATENTSCHRIFT

(11) **EP 0 572 349 B1**
(45) Veröffentlichungstag und Bekanntmachung des Hinweises auf die Patenterteilung: **27.12.1995**
(21) Anmeldenummer: 93810298.5
(22) Anmeldetag: 23.04.1993
(51) Int. Cl.: G01H 1/00, G10K 11/02

(54) **Kombinierter Kraft-, Dehnungs- und Schallemissionsaufnehmer**
Combined force-, strain and sound emission transducer
Capteur combiné de force, de contrainte et d'émission de son

(30) Priorität: 15.05.1992 CH 1558/92
(43) Veröffentlichungstag der Anmeldung: 01.12.1993
(73) Patentinhaber: K.K. HOLDING AG, CH-8408 Winterthur (CH)
(72) Erfinder: Cavalloni, Claudio, Dr., CH-8408 Winterthur (CH)

(56) Entgegenhaltungen:
- EP-A- 0 336 224
- EP-A- 0 459 948
- GB-A- 2 190 495
- US-A- 4 011 473
- TECHNISCHES MESSEN TM Bd. 47, Nr. 12, Dezember 1980, MUNCHEN DE, Seiten 427-434; J. KOLERUS : 'Schallemissionsanalyse, Teil 2 : Verfahren und Geräte'
- PATENT ABSTRACTS OF JAPAN vol. 8, no. 133 (P-281)(1570) 20. Juni 1984 & JP-A-59 35 114

## Beschreibung

Die Erfindung betrifft einen kombinierten Kraft-, Dehnungs- und Schallemissionsaufnehmer, eine Messvorrichtung sowie ein Ankopplungsverfahren.

Kraft- oder Dehnungssensoren, die in wichtige Kraftleitstellen von automatisierten Bearbeitungsmaschinen eingebaut werden und als Teil von Überwachungsanlagen Werkzeugwechsel einleiten, sind bekannt. Neben den Bearbeitungskräften, Momenten und Dehnungen spielen auch Maschinengeräusche oder Körperschall eine wichtige Rolle in der Überwachung von Bearbeitungsvorgängen. Bohrmaschinen-Überwachungsgeräte, welche Bohrerbruch auf Änderung des Körperschallspektrums überwachen, existieren bereits. Interessant ist die Kombination von Kraft-, Dehnungs- und Körperschallmessung in einem einzigen Aufnehmer, weil dadurch nur eine Aufnehmer-Einbaustelle notwendig ist, ebenso nur eine Kabelverbindung. Zudem bringen im Bereich der Feinbearbeitung Körperschallmessungen zusätzliche Informationen zur Kraft- und Dehnungsmessung. In der Grobberarbeitung ist die Kraft- und Dehnungsmessung aussagekräftiger als die Körperschallmessung. Derartige kombinierte Kraft-, Dehnungs- und Körperschallaufnehmer sind heute bereits im Gebrauch.

Die Körperschallmessung erfolgt mit einem Beschleunigungssensor. Ein solcher Sensor ist beschrieben in der europäischen Patentanmeldung EP-A-0 336 224. Dieser Sensor dient der Prüfung eines Messobjektes, insbesondere eines Reaktorbehälters, enthält ein Piezoelement und eine seismische Masse und ist auf eine Resonanzfrequenz zwischen 1 kHz und 100 kHz abgestimmt. Zwischen dem Bauteil und dem Beschleunigungsaufnehmer ist als Koppelmittel beispielsweise ein weiches Blech angebracht, welches mit dem Messobjekt verschraubt ist.

Von Interesse ist jedoch nicht nur die Analyse von relativ niederfrequenten Schallwellen (Körperschall, 10 kHz bis ca. 20 kHz), sondern auch jene von hochfrequenten (Schallemission, bis ca. 2 MHz). Dies verlangt eine noch höhere Resonanzfrequenz und eine noch bessere Ankopplung des Schallemissionssensors. Zudem ist die Montage von Einzelsensoren recht aufwendig, eine gewisse Standardisierung und Vormontage daher erwünscht. Es ist die Aufgabe der vorliegenden Erfindung, die genannten Nachteile zu beheben. Die Lösung der Aufgabe besteht darin, dass der Schallemissionssensor eine Montageeinheit bildet, welche ein piezoelektrisches Element, eine Montagebasis mit Koppelmembran und eine das piezoelektrische Element und teilweise die Montagebasis umschliessende Vergussmasse umfasst, wobei die Koppelmembran in einer Stufe des Gehäusebodens eines die Montageeinheit umschliessenden Gehäuses liegt, wobei ferner die Bodenfläche des Gehäusebodens bei ungespannter Koppelmembran um einen Abstand gegenüber der Bodenfläche der Montagebasis zurückgesetzt ist.

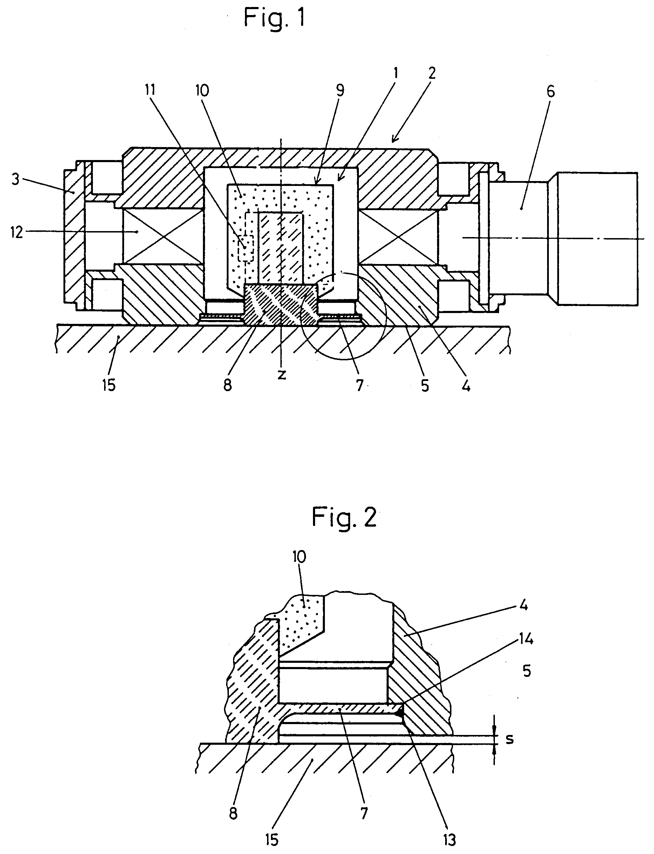

Dadurch wird eine gute Ankopplung des Schallemissionssensors auf das Messobjekt erreicht, wie im einzelnen bei der Beschreibung der Fig. 2 dargestellt wird.

Nachstehend wird die Erfindung anhand der Zeichnungen dargestellt Es stellen dar:
- Fig. 1: Einen kombinierten Kraft-, Dehnungs- und Schallemissionsaufnehmer mit erfindungsgemässem Schallemissionssensor (Querschnitt).
- Fig. 2: Ankopplungsmechanismus mittels erfindungsgemässer Kopplungsmembran.

Der in Fig. 1 dargestellte kombinierte Kraft-, Dehnungs- und Schallemissionsaufnehmer zeigt einen erfindungsgemässen Schallemissionssensor. Die Kräfte (ein- oder mehrdimensional) werden durch das piezoelektrische Kraftmesselement 12 gemessen. Sie werden eingeleitet über das Gehäuse 2, an das ein rohrförmiger Gehäusemantel 3 angeflanscht ist. 1 bezeichnet den erfindungsgemässen Schallemissionssensor, bestehend aus dem piezoelektrischen Messelement 9, der Montagebasis 8 mit Kopplungsmembran 7, der Vergussmasse 10 mit dem Parallelwiderstand 11, der auch extern angebracht sein oder fehlen kann. 4 bedeutet den Gehäuseboden, 5 die Bodenfläche, 6 den Stecker, der die Signalleitung aufnimmt. Das Piezoelement 9 kann ein polarisiertes Piezoelement aus gesinterter Keramik sein, dessen Polarisationsachse in der Hauptachse z des Systems liegt. Es kann aber auch ein zweckmässig geschnittener Einkristall aus einem piezoelektrischen Material, z.B. Quarz sein oder einer piezoelektrischen Polymerfolie, z.B. Polyvinylidenfluorid (PVDF), die beispielsweise auf ein Metallblech geklebt ist. Der Schallemissionssensor kann auch eine seismische Masse enthalten.

Der für die Übertragung hochfrequenter Schallwellen sehr wichtige Ankopplungsmechanismus des Schallemissionssensors 9 ist detailliert in Fig. 2 dargestellt. Der gezeigte Ausschnitt ist in Fig. 1 mit einem Kreis bezeichnet. Die bereits verwendeten Referenznummern bedeuten dasselbe wie in Fig. 1. Die Montagebasis 8 trägt umfänglich eine Kopplungsmembran 7, die einer Stufe 14 des Gehäusebodens 4 anliegt und mit diesem verbunden, z.B. verschweisst ist. Der Gehäuseboden 4, die Kopplungsmembran 7 und die Montagebasis 8 können auch aus einem Stück gefertigt sein. Die Membran 7 entkoppelt den Schallemissionssensor 1 von den Kraft-, bzw. Dehnungssignalen. Vor der Ankopplung des Schallemissionsensors 1 an das Messobjekt 15 befindet sich die Bodenfläche 5 des Gehäusebodens 4 in einem Abstand s von der Bodenfläche der Montagebasis und damit von der Oberfläche des Gehäusebodens des Messobjektes 15. Das in Patentanspruch 5 dargestellt Ankopplungsverfahren verläuft so, dass die Bodenfläche 5 auf das Messobjekt 15 gedrückt und daran befestigt wird, wodurch die Kopplungsmembran 7 gespannt und die Montagebasis 8 an die Oberfläche des Messobjektes 15 angekoppelt wird. Eine weitere Erhöhung der Anpresskraft auf das Gehäuse 2 verändert die Anpresskraft der Montagebasis 8 an das Messobjekt 15 nicht. Die Ankopplungsbedingungen bleiben definiert und konstant, was eine wesentliche Voraussetzung für die Bewertung der Schallemissionssignale zu diagnostischen Zwecken ist. Weiterhin ist gesichert, dass die Kopplungsmembran 7 vor Überlast und plastischer Deformation geschützt ist.

Der in Fig. 1 eingezeichnete elektrische Widerstand (parallel zum piezoelektrischen Messelement 9 liegend) bildet gemeinsam mit dem Messelement 9 ein RC-Glied (C: Kapazität des Messelementes 9), d.h. ein Hochpassfilter. Der Widerstand 9 kann, wie in der Figur dargestellt, in der Vergussmasse 10 integriert sein, er kann aber auch ausserhalb des Schallemissionssensors 9 liegen. Durch Veränderung des Widerstandes 9 kann der herausgefilterte und auf einen nicht gezeigten Vorstärker gelangende Frequenzbereich eingestellt werden. Dies kann zusätzlich oder ausschliesslich auch dadurch geschehen, dass der Vorverstärker ein zuschaltbares Hochpassfilter enthält. Der Parallelwiederstand 11 kann somit auch fehlen.

Durch die dargelegte Erfindung wird der Schallemissionssensor miniaturisiert und besonders durch ein neuartiges Ankoppplungsverfahren im hochfrequenten Messbereich erheblich leistungfähiger. Dadurch werden insbesondere bei Werkezugmaschinen neue Anwendungsmöglichkeiten erschlossen.

### Referenzliste

- 1: Schallemissionssensor
- 2: Gehäuse
- 3: Gehäusemantel
- 4: Gehäuseboden
- 5: Bodenfläche
- 6: Stecker
- 7: Kopplungdmembran
- 8: Montagebasis
- 9: piezoelektrisches Messelement (Beschleunigung) h dessen- Höhe, d dessen Durchmesser
- 10: Vergussmasse
- 11: elektrischer Widerstand
- 12: piezoelektrisches Kraftmesselement
- 13: Schweissverbindung
- 14: Stufe des Gehäusebodens
- 15: Messobjekt
- s: Spannweg für Ankopplung

Montageeinheit 7,8,9,10

## Patentansprüche

1. Kombinierter Kraft-, Dehnungs- und Schallemissionsaufnehmer, wobei der Schallemissionssensor eine Montageeinheit bildet, welche ein piezoelektrisches Element (9), eine Montagebasis (8) mit Koppelmembran (7) und eine das piezoelektrische Element (9) und teilweise die Montagebasis (8) umschliessende Vergussmasse (10) als Mindestbestandteile umfasst, wobei die Koppelmembran (7) in einer Stufe (14) des Gehäusebodens (4) eines die Montageeinheit (7 bis 10) umschliessenden Gehäuses (2) liegt, wobei ferner die Bodenfläche (5) des Gehäusebodens (4) bei ungespannter Koppelmembran (7) um einen Abstand (s) gegenüber der Bodenfläche der Montagebasis (8) zurückgesetzt ist.

2. Aufnehmer nach Anspruch 1, wobei das piezoelektrische Element (9) aus einer axial polarisierten Piezokeramik besteht.

3. Aufnehmer nach einem der Ansprüche 1 oder 2, wobei die Montageeinheit (7,8,9,10) zusätzlich eine seismische Masse umfasst.

4. Aufnehmer nach einem der Ansprüche 1, 2 oder 3, wobei die Montageeinheit (7,8,9,10) zusätzlich einen variablen elektrischen Widerstand (11) umfasst, welcher mit dem piezoelektrischen Element (9) ein Hochpassfilter bildet.

5. Ankopplungsverfahren für den Schallemissionssensor (1) eines Aufnehmers nach einem der Ansprüche 1 bis 4, wobei die Bodenfläche (5) auf ein Messobjekt (15) gedrückt und daran befestigt wird, wodurch die Kopplungsmembran (7) gespannt und die Montagebasis (8) mit einer genau definierten Kraft an die Oberfläche des Messobjektes (15) angekoppelt wird.

## Claims

1. Combined force, strain and sound emission transducer, the sound emission sensor forming one assembly unit comprising a piezoelement element (9), an assembly base (8) with coupling diaphragm (7) and an encapsulant (10) surrounding the piezoelectric element (9) and in part the assembly base (8) as minimum components, the coupling diaphragm (7) lying in a recess (14) in the bottom (4) of a housing (2) surrounding the assembly unit (7 to 10), whereby moreover the bottom surface (5) of the housing bottom (4) is set back from the bottom surface of the assembly base (8) by a distance s when the coupling diaphragm (7) is unloaded.

2. Transducer according to claim 1, with the piezoelectric element (9) consisting of an axially polarized piezoceramic.

3. Transducer according to claim 1 or 2, with the assembly unit (7, 8, 9, 10) enclosing a seismic mass in addition.

4. Transducer according to claim 1, 2 or 3, with the assembly unit (7, 8, 9, 10) enclosing a variable electrical resistor (11) in addition, which with the piezoelectric element (9) forms a high-pass filter.

5. Coupling method for the sound emission sensor (1) of a transducer according to one of claims 1 to 4, with the bottom surface (5) pressed onto a measuring object (15) and fixed to this so that the coupling diaphragm (7) is loaded and the assembly base (8) is coupled to the surface of the measuring object (15) with an exactly defined force.

## Revendications

1. Capteur combiné de force, d'allongement et d'émission de bruit, le capteur d'émission de bruit constituant une unité de montage comprenant un élément piézo-électrique (9), un socle de montage (8) avec membrane de couplage (7) et une masse de remplissage (10) enfermant l'élément piézo-électrique (9) et en partie le socle de montage (8) comme constituants minimals, compte tenu que la membrane de couplage (7) repose sur un épaulement (14) de l'embase (4) d'un boîtier (2) entourant l'unité de montage (7 à 10), la surface d'appui (5) de l'embase (4) étant en retrait d'une distance (S) par rapport à la face d'appui du socle de montage (8) lorsque la membrane de couplage (7) n'est pas en situation de précontrainte.

2. Capteur selon revendication de brevet 1, l'élément piézo-électrique (9) étant constitué d'une céramique polarisée axialement.

3. Capteur selon l'une des revendications 1 ou 2, l'unité de montage (7,8,9,10) comportant en outre une masse sismique.

4. Capteur selon l'une des revendications 1,2 ou 3, l'unité de montage (7,8,9,10) comportant en outre une résistance électrique variable (11) qui constitue avec l'élément piézo-électrique (9) un filtre passe-haut.

5. Procédé de couplage pour le capteur d'émission de bruit (1) d'un capteur selon l'une des revendications de brevet 1 à 4, la surface d'appui (5) étant pressée et fixée sur un objet soumis à mesure (15), la membrane de couplage (7) étant alors sous contrainte et le socle de montage (8) coupée à la surface de l'objet soumis a mesure (15) avec une force définie avec précision.
